# EUROPÄISCHE PATENTANMELDUNG

(11) **EP 3 379 803 A1**
(43) Veröffentlichungstag der Anmeldung: **26.09.2018**
(21) Anmeldenummer: 18159343.5
(22) Anmeldetag: 01.03.2018
(51) Int. Cl.: H04L 29/08

(54) **VERFAHREN ZUR ÜBERTRAGUNG VON DATEN ZWISCHEN EINER MASCHINENSTEUERUNG UND EINEM EXTERNEN COMPUTER**

(30) Priorität: 22.03.2017 DE 102017204851
(71) Anmelder: Frankl & Kirchner GmbH & Co KG Fabrik für Elektromotoren u. elektrische Apparate, 68723 Schwetzingen (DE)
(72) Erfinder: König, Mirco, 69493 Hirschberg (DE); Schmidt, Thomas, 69231 Rauenberg (DE)
(74) Vertreter: Rau, Schneck & Hübner Patentanwälte Rechtsanwälte PartGmbB

(57) **Zusammenfassung**

Zur Übertragung von Daten in Echtzeit zwischen einer Maschinensteuerung (2) und einem externen Computer (3) wird eine Datenverbindung (22) zwischen der Maschinensteuerung (2) und einem mobilen Datenübertragungsgerät (21), etwa einem Smartphone, hergestellt. Weiterhin wird eine Datenverbindung (28) zwischen dem mobilen Datenübertragungsgerät (21) und dem externen Computer (3) hergestellt. Anschließend werden die Daten zwischen der Maschinensteuerung (2) und dem externen Computer (3) über das mobile Datenübertragungsgerät (21) übertragen. Es resultiert ein Übertragungsverfahren, bei dem eine, insbesondere für einen Anwender der Maschinensteuerung, unkomplizierte Datenübertragung mit dem externen Computer erfolgt.

## Beschreibung

Die vorliegende Erfindung nimmt die Priorität der deutschen Patentanmeldung DE 10 2017 204 851.4 in Anspruch, deren Inhalt durch Bezugnahme hierin aufgenommen wird.

Die Erfindung betrifft ein Verfahren zur Übertragung von Daten zwischen einer Maschinensteuerung und einem externen Computer. Ferner betrifft die Erfindung eine Maschinensteuerung zur Durchführung eines derartigen Verfahrens, ein Übertragungssystem zur Durchführung eines derartigen Verfahrens, einen Datenspeicher, auf dem eine Anwendungssoftware für ein mobiles Datenübertragungsgerät abgelegt ist und einen Datenspeicher, auf dem eine Anwendungssoftware für einen externen Computer abgelegt ist.

Zur Entwicklung, zur Installation, zur Erstinbetriebnahme, zur Wartung oder zum Update einer Maschinensteuerung ist es erforderlich, Daten aus der Maschinensteuerung auszulesen beziehungsweise die Maschinensteuerung mit Daten zu versorgen. Entsprechende, beispielsweise kabelgebundene oder auch drahtlose, Übertragungsverfahren zwischen einem Datenübertragungsgerät und einer Maschinensteuerung sind bekannt, beispielsweise aus der EP 2 975 168 A1. Ein Übertragungssystem zur Überwachung eines Nähmaschinenverbundes ist bekannt aus der EP 1 475 470 B1. Aus der DE 10 2015 212 074 A1 ist ein System und ein Verfahren zum Datenaustausch mit einem Laser oder einer Werkzeugmaschine bekannt.

Es ist eine Aufgabe der vorliegenden Erfindung, ein Übertragungsverfahren der eingangs genannten Art derart weiterzubilden, dass eine, insbesondere für einen Anwender der Maschinensteuerung, unkomplizierte Datenübertragung mit dem externen Computer ermöglicht ist.

Diese Aufgabe ist erfindungsgemäß gelöst durch ein Übertragungsverfahren mit den in Anspruch 1 angegebenen Merkmalen.

Erfindungsgemäß wurde erkannt, dass eine Datenübertragung zwischen der Maschinensteuerung und dem externen Computer, beispielsweise zur Fernwartung der Maschinensteuerung, unkompliziert über ein mobiles Datenübertragungsgerät erfolgen kann, welches in Form beispielsweise eines Mobiltelefons oder eines Smartphones anwenderseitig regelmäßig vorliegt. Die Datenverbindung zwischen der Maschinensteuerung und dem mobilen Datenübertragungsgerät kann über eine Anwendungssoftware des mobilen Datenübertragungsgeräts, beispielsweise über eine Smartphone-App, hergestellt werden. Die Datenverbindung zwischen dem mobilen Datenübertragungsgerät und einem externen Computer kann über eine Anwendungssoftware des externen Computers hergestellt werden. Bei dieser Anwendungssoftware kann es sich beispielsweise um eine über einen Client-Browser abrufbare Anwendungssoftware handeln.

Über ein solches Übertragungsverfahren lässt sich eine Echtzeit-Ferndiagnose der Maschinensteuerung vornehmen. Das mobile Datenübertragungsgerät kann ein reines Verbindungsmedium zwischen der Maschinensteuerung und dem externen Computer darstellen. Das mobile Datenübertragungsgerät kann in einem Transparent-Modus arbeiten, bei dem Daten, die zwischen der Maschinensteuerung und dem externen Computer übertragen und/oder ausgetauscht werden, nicht im mobilen Datenübertragungsgerät zwischengespeichert werden. Ein Echtzeit-Datendurchsatz zwischen der Maschinensteuerung und dem externen Computer über das mobile Datenübertragungsgerät kann mit einer Zeitverzögerung von weniger als 200 Millisekunden und kann mit einer Zeitverzögerung im Bereich zwischen 20 und 100 Millisekunden stattfinden. Diese Übertragungs-Zeitverzögerung kann höchstens 100 Millisekunden und kann auch höchstens 50 Millisekunden betragen. Bei der Echtzeit-Datenübertragung zwischen der Maschinensteuerung und dem externen Computer über das mobile Datenübertragungsgerät können entsprechend Verarbeitungsergebnisse bei der Kommunikation zwischen diesen Endkomponenten "Maschinensteuerung" einerseits und "externer Computer" andererseits innerhalb einer vorgesehenen Zeitspanne vorliegen, die geringer sein kann als 1 s, die geringer sein kann als 0,5 s und die auch geringer sein kann als 0,25 s. Die Datenübertragung zwischen der Maschinensteuerung und dem externen Computer kann nach einer zeitlich zufälligen Verteilung oder alternativ zu vorherbestimmten Zeitpunkten, also beispielsweise innerhalb eines vorgegebenen Zeitrasters, stattfinden. Die Datenverbindung zwischen der Maschinensteuerung und dem externen Computer kann vom Anwender hergestellt werden, der hierfür nicht speziell geschult sein muss. Mithilfe eines solchen Übertragungsverfahrens ist eine Interaktion zwischen einer Bedienperson der mit der Maschinensteuerung gesteuerten Maschine einerseits und einer externen Wartungs/Diagnoseperson, also beispielsweise einem externen Servicetechniker, möglich. Die Bedienperson kann hierzu über das mobile Datenübertragungsgerät die Datenverbindung einerseits zur Maschinensteuerung und andererseits zum externen Computer herstellen. Die Wartungs/Diagnoseperson kann dann über den externen Computer von einem entfernten Servicepunkt aus Funktionsabläufe durch direkte Echtzeit-Ansteuerung der Maschinensteuerung initiieren und die Reaktion der Maschine durch Empfangen der Rückmeldungen von der Maschinensteuerung verfolgen. Über das mobile Datenübertragungsgerät lässt sich auf diese Weise eine Fernwartungsverbindung zwischen dem externen Computer und der Maschinensteuerung herstellen. Über das mobile Datenübertragungsgerät oder alternativ über eine parallele Kommunikationsverbindung, beispielsweise eine Telefonleitung, lässt sich ein zusätzlicher Kommunikationskanal zwischen der Wartungs/Diagnoseperson einerseits und der Bedienperson andererseits herstellen. Nach hergestellter Datenverbindung kann über den externen Computer auch eine komplexe Diagnose der Maschinensteuerung vorgenommen werden. Über die Datenverbindung zwischen der Maschinensteuerung und dem externen Computer über das mobile Datenübertragungsgerät kann der externe Computer Messdaten der Maschinensteuerung in Echtzeit auslesen. Bei diesen Messdaten kann es sich um Daten zu mindestens einer der folgenden Messgrößen handeln:
- Netzspannungsversorgung,
- Zwischenkreisspannung eines Umrichters der Maschinensteuerung bzw. der zu steuernden Maschine,
- Motorströme der zu steuernden Maschine,
- Spannungsversorgung eines Aktors der Maschine,
- Stromversorgung eines Aktors der Maschine,
- Temperatur eines Motortreibers der Maschine.

Diese Messdaten bzw. Messergebnisse können mithilfe einer Selbstdiagnose der Maschinensteuerung ermittelt und übertragen werden, die durch den externen Computer initiiert wird.

Eine Datenverbindung nach Anspruch 2 hat sich in der Praxis bewährt. Eine solche Datenverbindung kann über ein internes oder auch über ein externes Bluetooth-Modul der Maschinensteuerung hergestellt werden.

Eine Datenverbindung nach Anspruch 3 hat sich ebenfalls in der Praxis bewährt.

Eine Verbindungskennung nach Anspruch 4 erhöht die Sicherheit der Datenverbindung. Entsprechend ist auch die Anzeige einer Verbindungskennung des mobilen Datenübertragungsgeräts am externen Computer möglich. Teil des Datenübertragungsverfahrens kann eine Authentifizierung mit Hilfe des Austauschs von insbesondere verschlüsselten Kennungen sein.

Die Vorteile einer Maschinensteuerung nach Anspruch 5 oder 6 entsprechen denen, die vorstehend unter Bezugnahme auf das Datenübertragungsverfahren bereits erläutert wurden.

Entsprechendes gilt für ein Übertragungssystem nach Anspruch 7.

Über einen Datenspeicher nach Anspruch 8 kann dem Anwender die auf dem mobilen Datenübertragungsgerät lauffähige Anwendungssoftware übermittelt werden, sodass das mobile Datenübertragungsgerät als Teil eines entsprechenden Übertragungssystems eingesetzt werden kann.

Über einen Datenspeicher nach Anspruch 9 kann die auf dem externen Computer lauffähige Anwendungssoftware bereitgestellt werden, sodass der externe Computer als Teil eines Übertragungssystems eingesetzt werden kann.

Ein Ausführungsbeispiel der Erfindung wird nachfolgend anhand der Zeichnung näher erläutert. In dieser zeigen:
- Fig. 1: schematisch eine Anordnung von steuerungsseitigen Komponenten eines Übertragungssystems zur Übertragung von Daten zwischen einer Maschinensteuerung und einem externen Computer; und
- Fig. 2: ein Blockschaltbild des Übertragungssystems.

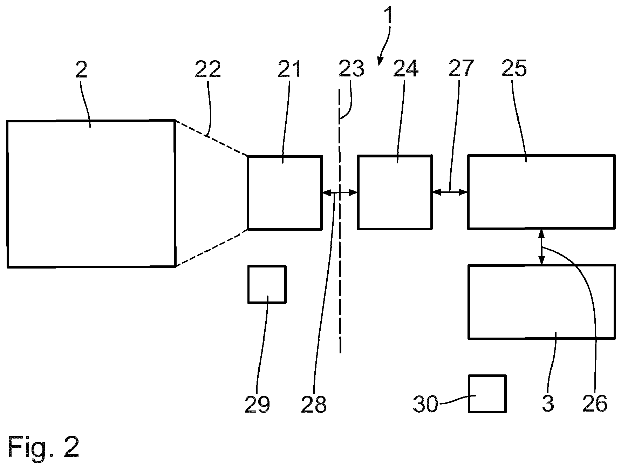

Ein Übertragungssystem 1 (vgl. Fig. 2) dient zum Übertragen von Daten zwischen einer Maschinensteuerung 2 und einem externen Computer 3, beispielsweise einem Personal Computer (PC). Bei der Maschinensteuerung 2 kann es sich um eine Steuerung für eine Nähmaschine, beispielsweise um eine Steuerung für einen Nähmaschinenantrieb, handeln.

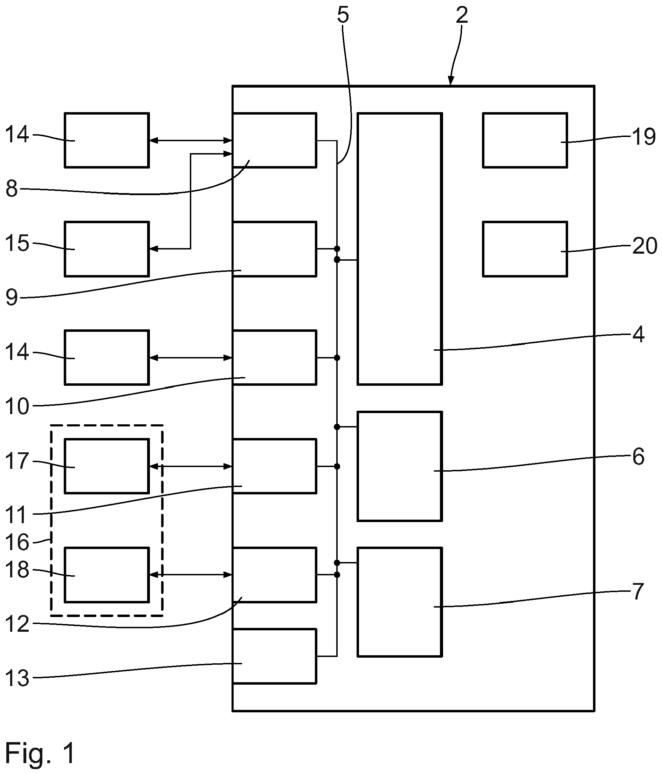

Fig. 1 zeigt Details der Maschinensteuerung 2 sowie steuerungsseitiger Komponenten des Übertragungssystems 1. Die Maschinensteuerung 2 hat als Hauptprozessor einen Mircocontroller 4, der über einen Bus 5 mit weiteren internen Komponenten der Maschinensteuerung 2 in Signalverbindung steht. Hierzu gehören ein Flash-Speicher 6, ein RAM 7, eine USB-Schnittstelle 8, eine Bluetooth-Schnittstelle 9, eine weitere Standard-Computerschnittstelle 10, eine Eingabe/Ausgabe-Schnittstelle 11, ein Motor-Treibermodul 12 und eine serielle Bus-Schnittstelle 13.

Mit der USB-Schnittstelle 8 stehen ein externes Bluetooth-Modul 14 und ein USB-Speicher 15 in Signalverbindung. Das externe Bluetooth-Modul 14 kann alternativ oder zusätzlich zur internen Bluetooth-Schnittstelle 9 zum Einsatz kommen.

Die Standard-Computerschnittstelle 10 kann ebenfalls mit dem externen Bluetooth-Modul 14 in Signalverbindung stehen, was in Fig. 1 ebenfalls angedeutet ist. Mit der Eingabe/Ausgabe-Schnittstelle 11 stehen Aktoren sowie Sensoren einer Maschine 16 in Signalverbindung, die zu einem Block 17 zusammengefasst sind. Mit dem Motor-Treibermodul 12 steht ein Motor 18 der Maschine 16 in Signalverbindung, bei dem es sich um einen DC Motor, also um einen Gleichstrommotor, zum Beispiel um einen Motor zum Antrieb einer Nähmaschinenkomponente, insbesondere zum Antrieb einer Nähmaschinen-Armwelle, handeln kann. Bei einem der Sensoren des Blocks 17 kann es sich um einen Motor-Drehzahlsensor und/oder um einen Temperatursensor und/oder um einen Sensor zum Erkennen eines unterwünschten Strom- beziehungsweise Spannungszustandes handeln.

Weitere interne Komponenten der Maschinensteuerung 2 sind ein Netzteil 19 und ein Umrichter 20. Diese weiteren Komponenten können ebenfalls mit dem Microcontroller 4 in Signalverbindung stehen.

Zum in Fig. 2 insgesamt dargestellten Übertragungssystem 1 gehören neben der Maschinensteuerung 2 noch ein mobiles Datenübertragungsgerät 21, beispielsweise ein Mobiltelefon oder ein Smartphone, das über eine Bluetooth-Signalverbindung 22 zum Datenaustausch mit der Maschinensteuerung 2 in Datenverbindung gebracht werden kann. Die Maschinensteuerung 2 einschließlich der in Fig. 1 dargestellten Komponenten einerseits und das mobile Datenübertragungsgerät 21 andererseits stellen lokale Komponenten des Übertragungssystems 1 am Ort der zu steuernden Maschine dar. Hiervon über eine Datenfernübertragung entfernt, was in Fig. 2 über eine Fernübertragungs-Grenze 23 angedeutet ist, sind die zentralen Komponenten des Übertragungssystems 1 angeordnet. Zu letzteren gehören ein zentraler Internetserver 24, der auch als Websocket Server bezeichnet ist, ein Software-Modul 25, auf dem eine Internet-Anwendungssoftware abgelegt ist, und der PC 3. Das Software-Modul 25 kann Teil des PC 3 sein oder kann beispielsweise über eine Internetverbindung und einen Client-Browser vom PC 3 beispielsweise aus einer Internet Cloud abrufbar sein, was in Fig. 2 durch eine Signalverbindung 26 zwischen dem PC 3 und dem Software-Modul 25 angedeutet ist.

Das Software-Modul 25 steht mit dem Internetserver 24 in Signalverbindung (vgl. 27 in Fig. 2). Über eine Internet-Signalverbindung oder auch eine andere Datenfernübertragungsverbindung 28, wie beispielsweise ein Mobilfunknetz, steht der Internetserver 24 als zentrale Komponente mit dem Mobiltelefon 21 als lokaler Komponente des Übertragungssystems 1 in Signalverbindung.

Zur Übertragung von Daten zwischen der Maschinensteuerung 2 und dem PC 3 wird das Übertragungssystem 1 folgendermaßen eingesetzt:

Zunächst wird zwischen der Maschinensteuerung 2 und dem mobiles Datenübertragungsgerät 21 eine Datenverbindung über die Bluetooth-Verbindung 22 hergestellt. Dies geschieht durch Anwahl einer entsprechenden Anwendungssoftware, die auf dem mobiles Datenübertragungsgerät 21 läuft, also beispielsweise durch Anwahl einer Smartphone-App. Anschließend wird eine Datenverbindung zwischen dem mobiles Datenübertragungsgerät 21 und dem PC 3 über die Internetverbindung 28, den Internetserver 24, die Signalverbindung 27, das Software-Modul 25 und die Signalverbindung 26 hergestellt. Dies geschieht nach Anwahl der entsprechenden Anwendungssoftware auf dem PC 3 durch Aufbau einer entsprechenden Datenfernübertragungs-Verbindung zwischen dem mobilen Datenübertragungsgerät 21 und dem PC 3. Nach hergestellter Datenverbindung zum PC 3 zeigt das mobile Datenübertragungsgerät 21 eine vom PC 3 übermittelte Verbindungskennung, die den PC 3 identifiziert. Eine entsprechende Verbindungskennung, die vom mobilen Datenübertragungsgerät 21 übermittelt wird, wird am PC 3 angezeigt.

Soweit das mobile Datenübertragungsgerät 21 und die Maschinensteuerung 2 eine Verbindungskennung austauschen, wird dies auch als Pairing bezeichnet.

Nach Herstellung der Datenverbindungen zwischen der Maschinensteuerung 2 und dem mobilen Datenübertragungsgerät 21 einerseits und dem mobilen Datenübertragungsgerät 21 und dem PC 3 andererseits werden die zu übertragenden Daten zwischen der Maschinensteuerung 2 und dem PC 3 über das mobile Datenübertragungsgerät 21 übertragen.

Bei den zu übertragenden Daten kann es sich um folgende Datentypen handeln:
- Parameter-Daten zur funktionellen Einstellung der Maschinensteuerung 2;
- Ablaufprogramme zur Anwendung durch die Maschinensteuerung 2, beispielsweise zum Ansteuern der Aktoren/Sensoren 17 und/oder des Motors 18;
- Online-Betriebszustände, insbesondere Echtzeit-Betriebszustände von Komponenten der Maschinensteuerung 2, also beispielsweise von den Aktoren/Sensoren 17 oder vom Motor 18;
- Status-Daten der Maschinensteuerung 2, beispielsweise eine Laufzeit des Motors 18 und/oder ein bis zur nächsten turnusmäßigen Wartung der Maschinensteuerung 2 verbleibender Zeitraum;
- Fehlerdaten der Maschinensteuerung 2;
- Im Flash-Speicher 6 und/oder im RAM 7 der Maschinensteuerung 2 abgespeicherte Fehler- bzw. Diagnosedaten;
- Echtzeit-Nachverfolgungsdaten für eine Debugging-Routine für Ablaufprogramme der Maschinensteuerung 2;
- Software-Updates für Anwendungssoftware der Maschinensteuerung 2.

Je nach Art der Daten erfolgt ein Datenübertrag "lokal nach zentral", "zentral nach lokal" oder ein bidirektionaler Datenübertrag über die Fernübertragungs-Grenze 23.

Fig. 2 zeigt zudem zugeordnet zum mobilen Datenübertragungsgerät 21 einen mobilen Datenspeicher 29, beispielsweise eine Speicher- oder Chipkarte, und zugeordnet zum PC 3 einen mobilen Datenspeicher 30, beispielsweise eine Speicherkarte oder einen USB-Stick.

Auf dem mobilen Datenspeicher 29 ist die Anwendungssoftware für das mobile Datenübertragungsgerät 21 abgelegt, mit der die Datenverbindung zwischen der Maschinensteuerung 2 und dem mobilen Datenübertragungsgerät 21 hergestellt werden kann. Auf dem mobilen Datenspeicher 30 ist die Anwendungssoftware für den PC 3 abgelegt, mit der die Datenverbindung zwischen dem PC 3 und dem mobilen Datenübertragungsgerät 21 hergestellt werden kann.

## Patentansprüche

1. Verfahren zur Übertragung von Daten zwischen einer Maschinensteuerung (2) und einem externen Computer (3) mit folgenden Schritten:
- Herstellung einer Datenverbindung (22) zwischen der Maschinensteuerung (2) und einem mobilen Datenübertragungsgerät (21),
- Herstellen einer Datenverbindung (28) zwischen dem mobilen Datenübertragungsgerät (21) und dem externen Computer (3),
- Übertragen der Daten zwischen der Maschinensteuerung (2) und dem externen Computer (3) über das mobile Datenübertragungsgerät (21),
- wobei die Datenübertragung zwischen der Maschinensteuerung (2) und dem externen Computer (3) über das mobile Datenübertragungsgerät (21) in Echtzeit stattfindet.

2. Verfahren nach Anspruch 1, **dadurch gekennzeichnet, dass** die Datenverbindung zwischen der Maschinensteuerung (2) und dem mobilen Datenübertragungsgerät (21) als Bluetooth-Signalverbindung (22) hergestellt wird.

3. Verfahren nach Anspruch 1 oder 2, **dadurch gekennzeichnet, dass** die Datenverbindung zwischen dem mobilen Datenübertragungsgerät (21) und dem externen Computer (3) über einen Internetserver (24) hergestellt wird.

4. Verfahren nach einem der Ansprüche 1 bis 3, **dadurch gekennzeichnet, dass** nach hergestellten Datenverbindungen das mobile Datenübertragungsgerät (21) eine vom externen Computer (3) übermittelte Verbindungskennung anzeigt, die den externen Computer identifiziert.

5. Maschinensteuerung (2) zur Durchführung eines Verfahrens nach einem der Ansprüche 1 bis 4.

6. Maschinensteuerung nach Anspruch 5, **gekennzeichnet durch** ein internes Bluetooth-Interface (9).

7. Übertragungssystem (1) zur Durchführung des Verfahrens nach einem der Ansprüche 1 bis 4, **gekennzeichnet durch** eine Maschinensteuerung (2) nach einem der Ansprüche 5 oder 6.

8. Datenspeicher (29), auf dem eine Anwendungssoftware für ein mobiles Datenübertragungsgerät (21) abgelegt ist, mit welcher eine Datenverbindung zwischen der Maschinensteuerung nach Anspruch 5 oder 6 und einem mobilen Datenübertragungsgerät (21) herstellbar ist.

9. Datenspeicher (30), auf dem eine Anwendungssoftware für einen externen Computer (3) abgelegt ist, mit welcher eine Datenverbindung zwischen dem externen Computer (3) und einem mobilen Datenübertragungsgerät (21) zum Einsatz in einem Übertragungssystem nach Anspruch 7 herstellbar ist.
